# EUROPEAN PATENT APPLICATION

(11) **EP 4 546 498 A1**
(43) Date of publication of application: **30.04.2025**
(21) Application number: 22950815.5
(22) Date of filing: 12.08.2022
(51) Int. Cl.: H01M 10/42, H01M 10/0567, H01M 4/13, H01M 10/0525

(54) **LITHIUM ION BATTERY**

(30) Priority: 14.07.2022 CN 202210832434
(71) Applicant: Dongguan Jiali Materials Technology Co., Ltd, Dongguan, Guangdong 523808 (CN)
(72) Inventor: TIAN, Mengyu, Dongguan, Guangdong 523000 (CN); HUANG, Xuejie, Dongguan, Guangdong 523000 (CN); YAN, Yong, Dongguan, Guangdong 523000 (CN)
(74) Representative: Zaboliene, Reda
(86) International application number: PCT/CN2022/112111
(87) International publication number: WO 2024/011702

(57) **Abstract**

The present disclosure relates to the technical field of battery manufacturing, and in particular relates to a lithium-ion battery. The lithium-ion battery comprises a separator, a cathode electrode, an anode electrode, and an electrolyte, wherein a coating of the cathode electrode comprises a cathode material; the cathode material comprises a cathode active material, a conductive agent, and a binder; the cathode active material comprises at least one selected from the group consisting of lithium iron phosphate and lithium manganese oxide. The coating of the cathode electrode further comprises an anode layer-forming additive; and/or, the electrolyte comprises an anode layer-forming additive; the anode layer-forming additive comprises at least one selected from the group consisting of elemental sulfur and a metal sulfide. The electrolyte comprises a layer-forming solvent. The lithium-ion battery provided in the present disclosure can effectively improve the cycling performance of lithium-ion batteries using lithium iron phosphate or lithium manganese oxide as a cathode active material.

## Description

### CROSS-REFERENCE TO RELATED APPLICATION

The present disclosure claims the benefit of Chinese Patent Application No. 202210832434.2, filed July 14, 2022, entire contents of which are incorporated herein by reference.

### TECHNICAL FIELD

The present disclosure relates to the field of battery manufacturing, specifically relates to a lithium-ion battery.

### BACKGROUND ART

Compared with other rechargeable battery systems, lithium-ion secondary batteries have the advantages of a high operating voltage, a light weight, a small size, no memory effect, a low self-discharge rate, a long cycle life, and a high energy density. Currently, they have been widely used in electric vehicles and mobile terminal products such as cellphones, laptops, and tablets.

During an initial charging process of a lithium-ion battery, an electrolyte is reduced on an anode surface to form an anode SEI (solid electrolyte interphase) layer. The SEI layer has the characteristic of ionic conduction and electronic insulation, which is crucial for normal operations of the lithium-ion battery. Parameters of the SEI layer on the anode surface of the lithium-ion battery, such as composition, integrity, stability, compactness, thickness, and conductivity, directly affect transport of lithium ions at the interphase between the electrolyte and the anode, thereby affecting cycling performance of the lithium-ion battery.

Lithium iron phosphate or lithium manganese oxide has the advantages of high capacity, low cost, and good safety, and is a preferred material for cathode active materials in lithium-ion batteries. However, lithium-ion batteries using lithium iron phosphate or lithium manganese oxide as cathode active materials generally suffer from the inability to form a structurally stable SEI layer on the anode surface, resulting in a bottleneck in improving cycling performance of the lithium-ion battery.

### SUMMARY

An object of the present disclosure is to provide a lithium-ion battery, which aims to alleviate the technical problem that there is a bottleneck in improving the cycling performance of existing lithium-ion batteries using lithium iron phosphate or lithium manganese oxide as a cathode active material.

The present disclosure provides a lithium-ion battery, comprising: a separator, a cathode electrode, an anode electrode, and an electrolyte;
wherein a coating of the cathode electrode comprises a cathode material; the cathode material comprises a cathode active material, a conductive agent, and a binder; the cathode active material comprises at least one selected from the group consisting of lithium iron phosphate and lithium manganese oxide;
the coating of the cathode electrode further comprises an anode layer-forming additive; and/or, the electrolyte comprises an anode layer-forming additive; the anode layer-forming additive comprises at least one selected from the group consisting of elemental sulfur and a metal sulfide;
the electrolyte comprises a layer-forming solvent, and the layer-forming solvent has a structural formula as follows: 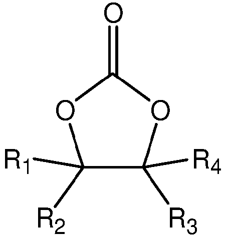
each of R₁, R₂, R₃, and R₄ is independently selected from hydrogen, halogen, alkyl, or hydrocarbyl; or
the layer-forming solvent has a structural formula as follows: 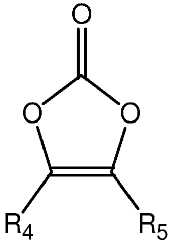
each of R₅, and R₆ is independently selected from hydrogen, halogen, alkyl, or hydrocarbyl.

In the present disclosure, when lithium iron phosphate and/or lithium manganese oxide are/is used as a cathode active material to prepare a lithium-ion battery, an anode layer-forming additive comprising at least one selected from the group consisting of elemental sulfur and a metal sulfide is added to the coating of the cathode electrode and/or the electrolyte. The anode layer-forming additive can migrate to the anode surface during the initial charging process of the lithium-ion battery (i.e., during the electrochemical reaction process inside the lithium-ion battery) and participate in the formation of a SEI layer on the anode surface, which is conducive to allowing the SEI layer on the anode surface to contain both a high-valence sulfur-containing species (i.e., a species containing high-valence sulfur) with sulfur in a valence state of +4 and/or +6 and a low-valence sulfur-containing species (i.e., a species containing low-valence sulfur) with sulfur in a valence state of from -2 to -1/4.

The high-valence sulfur-containing species can rapidly transfer lithium ions and promote transport of lithium ions at the interphase. The anode layer-forming additive is reduced to a polysulfide at the anode to further react with the layer-forming solvent, thereby generating a low-valence sulfur-containing species with a PEO (polyethylene oxide) structure. The PEO structure has good toughness and can effectively alleviate volume deformation of anode materials during charging and discharging processes. The existence of high-valence sulfur-containing and low-valence sulfur-containing species is beneficial for the formation of a structurally stable SEI layer on the anode surface, thereby reducing charge transfer impedance and polarization, improving cycling stability of the lithium-ion battery, and thus enhancing rate performance of the lithium-ion battery.

In some embodiments of the present disclosure, the metal sulfide may comprise at least one selected from the group consisting of lithium sulfide, iron sulfide, iron disulfide, titanium disulfide, titanium trisulfide, zinc sulfide, tin disulfide, molybdenum disulfide, tungsten disulfide, cobalt disulfide, and nickel sulfide.

In some embodiments of the present disclosure, the alkyl may be a substituted alkyl, and/or the hydrocarbyl may be a substituted hydrocarbyl.

Optionally, the alkyl may be methyl, ethyl, or butyl; the hydrocarbyl may be vinyl, propenyl, or butenyl.

In some embodiment of the present disclosure, when the coating of the cathode electrode comprises the anode layer-forming additive, a mass ratio of the anode layer-forming additive to the cathode active material may be (0.1-10): 100.

When the amount of the anode layer-forming additive meets the above conditions, it is conducive to further reducing the charge transfer impedance and increasing the cycling capacity, thereby improving the cycling performance of the lithium-ion battery.

Optionally, when the coating of the cathode electrode comprises the anode layer-forming additive, the mass ratio of the anode layer-forming additive to the cathode active material may be (0.1-3): 100.

In some embodiments of the present disclosure, when the electrolyte comprises the anode layer-forming additive, a mass concentration of the anode layer-forming additive in the electrolyte may be 0.01-10 g/L.

When the amount of anode layer-forming additive meets the above conditions, it is conducive to further reducing the charge transfer impedance and increasing the cycling capacity, thereby improving the cycling performance of the lithium-ion battery.

Optionally, when the electrolyte comprises the anode layer-forming additive, the mass concentration of the anode layer-forming additive in the electrolyte may be 0.05-1 g/L.

In some embodiments of the present disclosure, when the coating of the cathode electrode comprises the anode layer-forming additive, the cathode electrode may be prepared by a method comprising steps of coating a mixed slurry containing the anode layer-forming additive, the cathode active material, the conductive agent, and the binder on a cathode foil, and subjecting the cathode foil to heat treatment at 80-160 °C for 4 h -12 h.

The above heat treatment conditions are conducive to improving the uniformity of the mixed slurry on the surface of the cathode foil, thereby further enhancing the cycling performance of the lithium-ion battery.

In some embodiments of the present disclosure, when the coating of the cathode electrode comprises the anode layer-forming additive, the cathode electrode may be prepared by a method comprising steps of dispersing the anode layer-forming additive in a liquid or a gas using a liquid-phase method or a gas-phase method, and uniformly depositing the anode layer-forming additive on a surface of the cathode electrode.

In some embodiments of the present disclosure, when the coating of the cathode electrode comprises the anode layer-forming additive, the cathode electrode may be prepared by a method comprising steps of dissolving sublimated sulfur powder in carbon disulfide, coating the elemental sulfur in carbon disulfide on a surface of the cathode electrode, and drying.

In some embodiments of the present disclosure, a coating of the anode electrode may comprise an anode active material, which may comprise at least one selected from the group consisting of a carbon-based material, a silicon-based material, an alloy, and lithium.

The above anode active materials are beneficial for the formation of a stable SEI layer on the anode surface.

In some embodiments of the present disclosure, the anode active material may comprise graphite, silicon-carbon with a specific capacity of 450, or silicon.

In some embodiments of the present disclosure, the layer-forming solvent may comprise at least one selected from the group consisting of Ethylene carbonate, Fluoroethylene carbonate, Difluoroethylene carbonate, Vinylene carbonate, and 2,3-Butylene carbonate.

The above substances comprised in the layer-forming solvent can react with the polysulfide formed by the reduction of the anode layer-forming additive at the anode to generate a low-valence sulfur-containing species with a PEO structure, which further improves the cycling stability of the lithium-ion battery, thereby enhancing the rate performance of the lithium-ion battery.

In some embodiments of the present disclosure, a mass of the layer-forming solvent may be 1 %-100% of a total mass of solvents in the electrolyte.

The mass of the layer-forming solvent is defined to be 1%-100% of the total mass of solvents in the electrolyte, so that the cycling stability of the lithium-ion battery can be effectively improved.

Optionally, the mass of the layer-forming solvent may be 5%-40% of the total mass of solvents in the electrolyte.

In some embodiments of the present disclosure, a median particle size D₅₀ of the anode layer-forming additive may be 0.01-20 µm.

The above range of the median particle size of the anode layer-forming additive is favorable for further improving the cycling stability of the lithium-ion battery.

Optionally, the median particle size D₅₀ of the anode layer-forming additive may be 0.05-5 µm.

In some embodiments of the present disclosure, after a formation process of the lithium-ion battery, a solid electrolyte interphase layer on a surface of the anode electrode contains a high-valence sulfur-containing species and a low-valence sulfur-containing species; in the solid electrolyte interphase layer on the surface of the anode electrode, the high-valence sulfur-containing species may contain sulfur in a valence state of +4 and/or +6, and have a S2p spectral peak at 168-172 eV; in the solid electrolyte interphase layer on the surface of the anode electrode, the low-valence sulfur-containing species may contain sulfur in a valence state of from -2 to -1/4, and have a S2p spectral peak at 160-166 eV.

Optionally, in the solid electrolyte interphase layer on the surface of the anode electrode, an area ratio of the S2p spectral peak of the high-valence sulfur-containing species to the S2p spectral peak of the low-valence sulfur-containing species may be (1-4): 1.

Optionally, after the formation process of the lithium-ion battery, a cathode electrolyte interphase layer on a surface of the cathode electrode may contain a high-valence sulfur-containing species; in the cathode electrolyte interphase layer on the surface of the cathode electrode, the high-valence sulfur-containing species may contain sulfur in a valence state of +4 and/or +6, and have a S2p spectral peak at 168-172 eV.

### BRIEF DESCRIPTION OF THE DRAWINGS

In order to more clearly illustrate the technical solutions of the embodiments of the present disclosure, a brief introduction will be given to the accompanying drawings of the embodiments below. It should be understood that the following drawings only illustrate certain embodiments of the present disclosure and should not be considered as a limitation of the scope. For those skilled in the art, other relevant drawings can be obtained based on these drawings without creative labor.
Figure 1 illustrates a S2p X-ray photoelectron spectroscopy (XPS) spectrum of the anode of the lithium-ion battery prepared in Example 1 after formation;
Figure 2 illustrates a S2p XPS spectrum of the cathode of the lithium-ion battery prepared in Example 1 after formation;
Figure 3 illustrates the initial charging curves of the lithium-ion batteries prepared in Example 1 and Comparative Example 1;
Figure 4 illustrates the cycle performance of the lithium-ion batteries prepared in Example 1 and Comparative Example 1 over 100 cycles;
Figure 5 illustrates the rate performance of the lithium-ion batteries prepared in Example 1 and Comparative Example 1; and
Figure 6 illustrates the impedance spectra of the lithium-ion batteries prepared in Example 1 and Comparative Example 1.

### DETAILED DESCRIPTION

In order to clarify the objective, technical solution, and advantages of the embodiments of the present disclosure, a clear and complete description of the technical solutions in the embodiments of the present disclosure will be provided below. Unless otherwise specified, conditions in the embodiments are in accordance with conventional ones or recommended by manufacturers. Reagents or instruments used are conventional ones that can be commercially available, unless otherwise specified.

Lithium-ion batteries using lithium iron phosphate or lithium manganese oxide as a cathode active material generally suffer from the inability to form a structurally stable SEI layer on the anode surface, resulting in a bottleneck in improving the cycling performance of the lithium-ion battery.

Therefore, the present disclosure provides a lithium-ion battery, comprising: a separator, a cathode electrode, an anode electrode, and an electrolyte;
wherein a coating of the cathode electrode comprises a cathode material; the cathode material comprises a cathode active material, a conductive agent, and a binder; the cathode active material comprises at least one selected from the group consisting of lithium iron phosphate (LiFePO₄) and lithium manganese oxide (LiMn₂O₄);
the coating of the cathode electrode further comprises an anode layer-forming additive; and/or, the electrolyte comprises an anode layer-forming additive; the anode layer-forming additive comprises at least one selected from the group consisting of elemental sulfur and a metal sulfide;
the electrolyte comprises a layer-forming solvent, and the layer-forming solvent has a structural formula as follows: 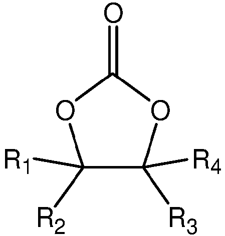
each of R₁, R₂, R₃, and R₄ is independently selected from hydrogen, halogen, alkyl, or hydrocarbyl; or
the layer-forming solvent has a structural formula as follows: 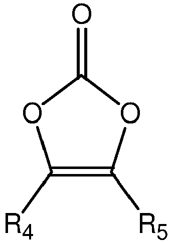
each of R₅, and R₆ is independently selected from hydrogen, halogen, alkyl, or hydrocarbyl.

It should be understood that in the present disclosure, the cathode active material may comprise both lithium iron phosphate and lithium manganese oxide, or may comprise lithium iron phosphate or lithium manganese oxide. The anode layer-forming additive may comprise both elemental sulfur and a metal sulfide, or may comprise elemental sulfur or the metal sulfide. The anode layer-forming additive as defined in the present disclosure may be contained in both the coating of the cathode electrode and the electrolyte, or may be contained in the coating of the cathode electrode or in the electrolyte.

In the present disclosure, the layer-forming additive comprises at least one selected from the group consisting of elemental sulfur and a metal sulfide, and serves to effectively improve the stability of the anode SEI layer. Specifically, when lithium iron phosphate and/or lithium manganese oxide are/is used as a cathode active material to prepare a lithium-ion battery, an anode layer-forming additive comprising at least one selected from the group consisting of elemental sulfur and a metal sulfide is added to the coating of the cathode electrode and/or the electrolyte. The anode layer-forming additive can migrate to the anode surface during the initial charging process of the lithium-ion battery (i.e., during the electrochemical reaction process inside the lithium-ion battery) and participate in the formation of the SEI layer on the anode surface, which is conducive to allowing the SEI layer on the anode surface to contain both a high-valence sulfur-containing species with sulfur in a valence state of +4 and/or +6 and a low-valence sulfur-containing species with sulfur in a valence state of from -2 to -1/4.

The high-valence sulfur-containing species can rapidly transfer lithium ions and promote transport of lithium ions at the interphase. The anode layer-forming additive is reduced into a polysulfide at the anode to further react with the layer-forming solvent, thereby generating a low-valence sulfur-containing species with a PEO structure. The PEO structure has good toughness and can effectively alleviate volume deformation of anode materials during charging and discharging processes, so that reaction plateaus can be observed at 1-1.3V and 1.6-2V in the initial charging curve of the lithium-ion battery.

The existence of high-valence sulfur-containing and low-valence sulfur-containing species is beneficial for the formation of a structurally stable SEI layer on the anode surface, thereby reducing the charge transfer impedance and polarization, improving the battery cycling stability, and thus enhancing the rate performance of the lithium-ion battery.

Exemplarily, when a metal sulfide is selected as the anode layer-forming additive, the metal sulfide may comprise at least one selected from the group consisting of lithium sulfide (Li₂S), iron sulfide (Fe₂S₃), iron disulfide (FeS₂), titanium disulfide (TiS₂), titanium trisulfide (TiS₃), zinc sulfide (ZnS), tin disulfide (SnS₂), molybdenum disulfide (MoS₂), tungsten disulfide (WS₂), cobalt disulfide (CoS₂), and nickel sulfide (NiS).

It should be noted that the metal sulfide may be not limited to the above substances.

In the present disclosure, when elemental sulfur is selected as the anode layer-forming additive, it is advantageous to further improve the cycling performance of the lithium-ion battery, compared to a metal sulfide selected as the anode layer-forming additive.

In the present disclosure, a median particle size D₅₀ of the anode layer-forming additive is 0.01-20 µm. The above range of the median particle size D₅₀ of the anode layer-forming additive is favorable for further improving the cycling stability of the lithium-ion battery.

Exemplarily, the median particle size D₅₀ of the anode layer-forming additive may be 0.01 µm, 0.05 µm, 2 µm, 5 µm, 10 µm, or 20 µm, etc.

Optionally, the median particle size D₅₀ of the anode layer-forming additive may be 0.05-5 µm. The above range of the median particle size of the anode layer-forming additive is more favorable for improving the cycling stability of the lithium-ion battery.

In the present disclosure, when the coating of the cathode electrode comprises the anode layer-forming additive, a mass ratio of the anode layer-forming additive to the cathode active material is (0.1-10): 100. When the amount of the anode layer-forming additive meets the above conditions, it is conducive to further reducing the charge transfer impedance and increasing the cycling capacity, thereby improving the cycling performance of the lithium-ion battery.

Exemplarily, when the coating of the cathode electrode comprises the anode layer-forming additive, the mass ratio of the anode layer-forming additive to the cathode active material may be 0.1: 100, 1: 100, 2: 100, 5: 100, or 10: 100, etc.

Optionally, when the coating of the cathode electrode comprises the anode layer-forming additive, the mass ratio of the anode layer-forming additive to the cathode active material is (0.1-3): 100. The above ratio is favorable for further improving the cycling stability of the lithium-ion battery.

Optionally, when the coating of the cathode electrode comprises the anode layer-forming additive, the cathode electrode is prepared by a method comprising steps of coating a mixed slurry containing the anode layer-forming additive, the cathode active material, the conductive agent, and the binder on a cathode foil, and subjecting the cathode foil to heat treatment at 80-160 °C for 4 h -12 h.

The above heat treatment conditions are conducive to improving the uniformity of the mixed slurry on the surface of the cathode foil, thereby further enhancing the cycling performance of the lithium-ion battery.

Exemplarily, a temperature of the heat treatment may be 80 °C, 100 °C, 120 °C, 140 °C or 160 °C, etc.; a time of the heat treatment may be 4 h, 5 h, 8 h, 10 h or 12 h, etc.

It should be noted that an order of adding the anode layer-forming additive, the cathode active material, the conductive agent, and the binder in the mixed slurry is not defined in the present disclosure.

In other feasible embodiments, when the coating of the cathode electrode comprises the anode layer-forming additive, the cathode electrode may be prepared by a method comprising steps of dispersing the anode layer-forming additive in a liquid or a gas using a liquid-phase method or a gas-phase method, and uniformly depositing the anode layer-forming additive on a surface of the cathode electrode. Exemplarily, the cathode electrode may be prepared by a method comprising steps of dissolving sublimated sulfur powder in carbon disulfide, coating the elemental sulfur in carbon disulfide on a surface of the cathode electrode, and drying.

In the present disclosure, when the electrolyte comprises the anode layer-forming additive, a mass concentration of the anode layer-forming additive in the electrolyte is 0.01-10 g/L. When the amount of anode layer-forming additive meets the above conditions, it is conducive to further reducing the charge transfer impedance and increasing the cycling capacity, thereby improving the cycling performance of the lithium-ion battery.

Exemplarily, when the electrolyte comprises the anode layer-forming additive, the mass concentration of the anode layer-forming additive in the electrolyte may be 0.01g/L, 0.05g/L, 0.5g/L, 1.0g/L, 2.0g/L, 5.0g/L, or 10.0g/L, etc.

Optionally, when the electrolyte comprises the anode layer-forming additive, the mass concentration of the anode layer-forming additive in the electrolyte may be 0.05-1 g/L.

As stated above, the layer-forming solvent has a structure containing a cyclic carbonate, and each of R₁, R₂, R₃, and R₄ is independently selected from hydrogen, halogen, alkyl, or hydrocarbyl. The alkyl may be a substituted alkyl, and/or the hydrocarbyl may be a substituted hydrocarbyl, such as halogenated alkyl or halogenated hydrocarbyl; the alkyl group may be methyl, ethyl, or butyl, etc.; the hydrocarbyl may be vinyl, propenyl, or butenyl, etc.

Exemplarily, the layer-forming solvent may be at least one selected from the group consisting of Ethylene carbonate (EC), Fluoroethylene carbonate (FEC), Difluoroethylene carbonate (DFEC), Vinylene carbonate (VC), and 2,3-Butylene carbonate (BC). The above substances comprised in the layer-forming solvent can react with the polysulfide formed by the reduction of the anode layer-forming additive at the anode to generate a low-valence sulfur-containing species with a PEO structure, which further improves the cycling stability of the lithium-ion battery, thereby enhancing the rate performance of the lithium-ion battery.

It should be noted that the layer-forming solvent may be not limited to the above-mentioned substances, as long as it can satisfy the structural formula of the layer-forming solvent defined in the present disclosure.

In the present disclosure, a mass of the layer-forming solvent is 1%-100% of a total mass of solvents in the electrolyte, which can effectively improve the cycling stability of the lithium-ion battery.

Exemplarily, the mass of the layer-forming solvent may be 1%, 5%, 10%, 30%, 50%, or 100%, etc. of the total mass of solvents in the electrolyte.

Optionally, the mass of the layer-forming solvent may be 5%-40% of the total mass of solvents in the electrolyte; which can further the cycling stability of the lithium-ion battery.

In the present disclosure, when the cathode active material is lithium iron phosphate, it is favorable to further improve the cycling performance of the lithium-ion battery, compared to lithium manganese oxide selected as the cathode active material.

In the present disclosure, a coating of the anode electrode comprises an anode active material, which comprises at least one selected from the group consisting of a carbon-based material, a silicon-based material, an alloy, and lithium. The above anode active materials are beneficial for the formation of a stable SEI layer on the anode surface.

Exemplarily, the anode active material may comprise graphite, silicon-carbon with a specific capacity (mass specific capacity) of 450, or silicon.

Further, selecting graphite as the anode active material is beneficial to further improving the cycle performance of the lithium-ion battery.

In the present disclosure, after a formation process of the lithium-ion battery, a solid electrolyte interphase layer (SEI layer) on a surface of the anode electrode contains a high-valence sulfur-containing species and a low-valence sulfur-containing species; in the solid electrolyte interphase layer (SEI layer) on the surface of the anode electrode, the high-valence sulfur-containing species may contain sulfur in a valence state of +4 and/or +6, and have a S2p spectral peak at 168-172 eV; in the solid electrolyte interphase layer (SEI layer) on the surface of the anode electrode, the low-valence sulfur-containing species may contain sulfur in a valence state of from -2 to -1/4, and have a S2p spectral peak at 160-166 eV.

Optionally, in the solid electrolyte interphase layer (SEI layer) on the surface of the anode electrode, an area ratio of the S2p spectral peak of the high-valence sulfur-containing species to the S2p spectral peak of the low-valence sulfur-containing species may be (1-4): 1; which is beneficial to further improving the cycle performance of batteries.

In the present disclosure, after the formation process of the lithium-ion battery, a cathode electrolyte interphase layer (CEI layer) on a surface of the cathode electrode contains a high-valence sulfur-containing species; in the cathode electrolyte interphase layer (CEI layer) on the surface of the cathode electrode, the high-valence sulfur-containing species may contain sulfur in a valence state of +4 and/or +6, and have a S2p spectral peak at 168-172 eV.

The characteristics and performance of lithium-ion batteries provided in the present disclosure are further described in detail below in conjunction with embodiments.

### Example 1

A lithium-ion battery was prepared in Example 1, by using the following method.
(1) 10 g of LiFePO₄ was evenly mixed with 0.1 g of elemental sulfur powder, then 0.56 g of conductive carbon black (SP) and 0.56 g of polyvinylidene fluoride (PVDF) were added and evenly stirred to obtain a cathode mixed slurry. The cathode mixed slurry was uniformly coated on an aluminum foil, then dried and rolled to obtain a cathode electrode.
(2) 9.4 g of graphite, 0.3 g of conductive carbon black (SP), 0.15 g of sodium carboxymethyl cellulose (CMC), 0.15 g of styrene butadiene rubber (SBR), and 25 mL of deionized water were stirred evenly to obtain an anode mixed slurry. The anode mixed slurry was uniformly coated on a copper foil, then dried and rolled to obtain an anode electrode.
(3) An separator was placed between the cathode electrode obtained in step (1) and the anode electrode obtained in step (2), 120 µL of electrolyte was injected, a gasket and a shrapnel were placed, then sealing in a press was conducted to obtain a lithium-ion battery.

The electrolyte was 1.0 M LiPF₆ dissolved in a mixture of ethylene carbonate (EC), dimethyl carbonate (DMC) and ethyl methyl carbonate (EMC) in a volume ratio of 1:1:1.

### Example 2

A lithium-ion battery was prepared in Example 2, by using the following method.
(1) 10 g of LiFePO₄, 0.56 g of conductive carbon black (SP) and 0.56 g of polyvinylidene fluoride (PVDF) were evenly stirred to obtain a cathode mixed slurry. The cathode mixed slurry was uniformly coated on an aluminum foil, then dried and rolled to obtain a cathode electrode.
(2) 9.4 g of graphite, 0.3 g of conductive carbon black (SP), 0.15 g of sodium carboxymethyl cellulose (CMC), 0.15 g of styrene butadiene rubber (SBR), and 25 mL of deionized water were stirred evenly to obtain an anode mixed slurry. The anode mixed slurry was uniformly coated on a copper foil, then dried and rolled to obtain an anode electrode.
(3) An separator was placed between the cathode electrode obtained in step (1) and the anode electrode obtained in step (2), 120 µL of electrolyte was injected, a gasket and a shrapnel were placed, then sealing in a press was conducted to obtain a lithium-ion battery.

The electrolyte pre-prepared was 1.0 M LiPF₆ dissolved in a mixture of ethylene carbonate (EC), dimethyl carbonate (DMC) and ethyl methyl carbonate (EMC) in a volume ratio of 1:1:1, and elemental sulfur powder was added to the electrolyte and stirred until thoroughly dissolved, and a resulting liquid was used as the final electrolyte; a final concentration of the elemental sulfur in the final electrolyte was 0.5 mg/mL.

### Example 3

A lithium-ion battery was prepared in Example 3, and a difference between Example 3 and Example 1 was that the mass of elemental sulfur in step (1) was different. In Example 3, the mass of elemental sulfur was 0.01 g.

### Example 4

A lithium-ion battery was provided in Example 4, and a difference between Example 4 and Example 1 was that the mass of elemental sulfur in step (1) was different. In Example 4, the mass of elemental sulfur was 0.5 g.

### Example 5

A lithium-ion battery was provided in Example 5, and a difference between Example 5 and Example 1 was that the graphite in step (2) was replaced with silicon-carbon with a mass specific capacity of 450.

### Example 6

A lithium-ion battery was provided in Example 6, and a difference between Example 6 and Example 1 was that the graphite in step (2) was replaced with silicon.

### Example 7

A lithium-ion battery was provided in Example 7, and a difference between Example 7 and Example 1 was that the LiFePO₄ in step (1) was replaced with LiMnO₂.

### Example 8

A lithium-ion battery was provided in Example 8, and a difference between Example 8 and Example 1 was that the elemental sulfur powder in step (1) was replaced with lithium sulfide.

### Example 9

A lithium-ion battery was provided in Example 9, and a difference between Example 9 and Example 1 was that the elemental sulfur powder in step (1) was replaced with titanium disulfide.

### Example 10

A lithium-ion battery was provided in Example 10, and a difference between Example 10 and Example 1 was that the elemental sulfur powder in step (1) was replaced with molybdenum disulfide.

### Example 11

A lithium-ion battery was provided in Example 11, and a difference between Example 11 and Example 1 was that the ethylene carbonate (EC) in step (3) was replaced with difluoroethylene carbonate (DFEC).

### Example 12

A lithium-ion battery was provided in Example 12, and a difference between Example 12 and Example 1 was that the ethylene carbonate (EC) in step (3) was replaced with vinylene carbonate (VC).

### Example 13

A lithium-ion battery was provided in Example 13, and a difference between Example 13 and Example 1 was that the electrolyte in step (3) was different; the electrolyte in Example 13 was 1.0 M LiPF₆ in EC.

### Example 14

A lithium-ion battery was provided in Example 14, and a difference between Example 14 and Example 1 was that the electrolyte in step (3) was different. The electrolyte in Example 14 was 1.0 M LiPF₆ dissolved in a mixture of dimethyl carbonate (DMC), ethyl methyl carbonate (EMC), and ethylene carbonate (EC), wherein a volume ratio of DMC to EMC was 1: 1, and a percentage of EC in the mixture by weight was 5 wt%.

### Example 15

A lithium-ion battery was provided in Example 15, and a difference between Example 15 and Example 2 was that the concentration of the elemental sulfur in the electrolyte in step (3) was different. The concentration of the elemental sulfur in the electrolyte in Example 15 was 0.01 mg/mL.

### Example 16

A lithium-ion battery was provided in Example 16, and a difference between Example 16 and Example 2 was that the concentration of the elemental sulfur in the electrolyte in step (3) was different. The concentration of the elemental sulfur in the electrolyte in Example 16 was 2.0 mg/mL.

### Comparative Example 1

A lithium-ion battery was provided in Comparative Example 1, and a difference between Comparative Example 1 and Example 1 was that the step (1) is different. Step (1) in Comparative Example 1 was as follows:

10 g of LiFePO₄, 0.56 g of conductive carbon black (SP) and 0.56 g of polyvinylidene fluoride (PVDF) were evenly stirred to obtain a cathode mixed slurry. The cathode mixed slurry was uniformly coated on an aluminum foil, then dried and rolled to obtain a cathode electrode.

### Comparative Example 2

A lithium-ion battery was provided in Comparative Example 2, and a difference between Comparative Example 2 and Example 1 was that the electrolyte in step (3) was different. The electrolyte in Comparative Example 2 was 1.0 M LiPF₆ dissolved in a mixture of dimethyl carbonate (DMC) and ethyl methyl carbonate (EMC) at a volume ratio of 1: 1.

### Experimental Example 1

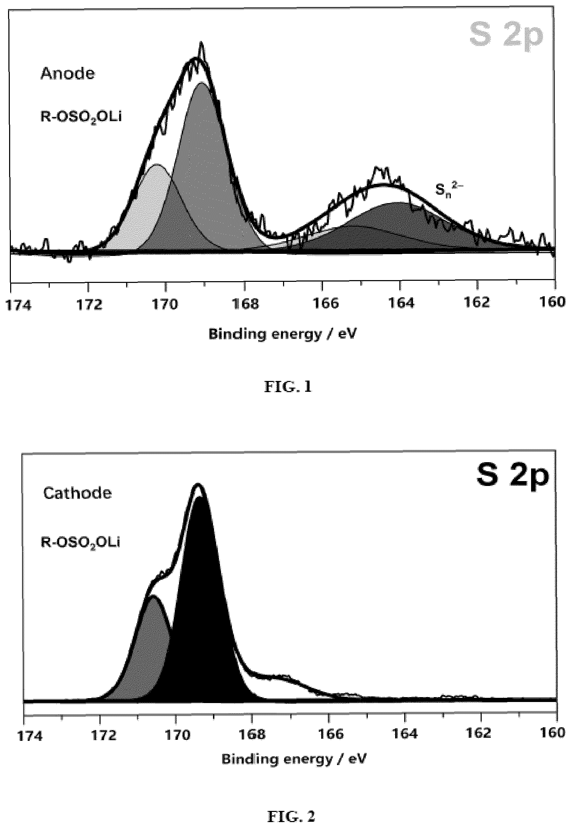

After a formation process of the lithium-ion battery prepared in Example 1, the anode and the cathode were respectively analyzed by the X-ray photoelectron spectroscopy (XPS) to obtain S2p XPS spectra, and the experimental results were shown in FIG. 1 and FIG. 2.

As can be seen from FIG. 1, after the formation process of the lithium-ion battery prepared in Example 1, the S2p XPS spectrum of the anode had a characteristic peak at 168-172 eV corresponding to the high-valence sulfur-containing species and a characteristic peak at 160-166eV corresponding to the low-valence sulfur-containing species, which indicated that after the formation process, elemental sulfur (the anode layer-forming additive) reacted to generate the high-valence sulfur-containing species with sulfur in a valence state of +4 and/or +6 and the low-valence sulfur-containing species with sulfur in a valence state of from -2 to -1/4 simultaneously in the SEI layer on the anode surface. The high-valence sulfur-containing species was generated due to an oxidation reaction of sulfur at the cathode. The generated high-valence sulfur-containing species had a structure similar to R-OSO₂OLi, and diffused to the anode, so that Li ions could be quickly transported and the interphase impedance was reduced. It was speculated that the low-valence sulfur-containing species existed due to the reduction of the elemental sulfur (the anode layer-forming additive) to polysulfides, which further reacted with ethylene carbonate (EC) to form the SEI layer with a PEO structure, at the anode.

As can be seen from FIG. 2, after the formation process of the lithium-ion battery prepared in Example 1, the S2p XPS spectrum of the cathode had a characteristic peak at 168-172eV corresponding to the high-valence sulfur-containing species, which indicated that after the formation process, elemental sulfur (the anode layer-forming additive) reacted to generate the high-valence sulfur-containing species with sulfur in a valence state of +4 and/or +6 in the CEI layer on the cathode surface.

### Experimental Example 2

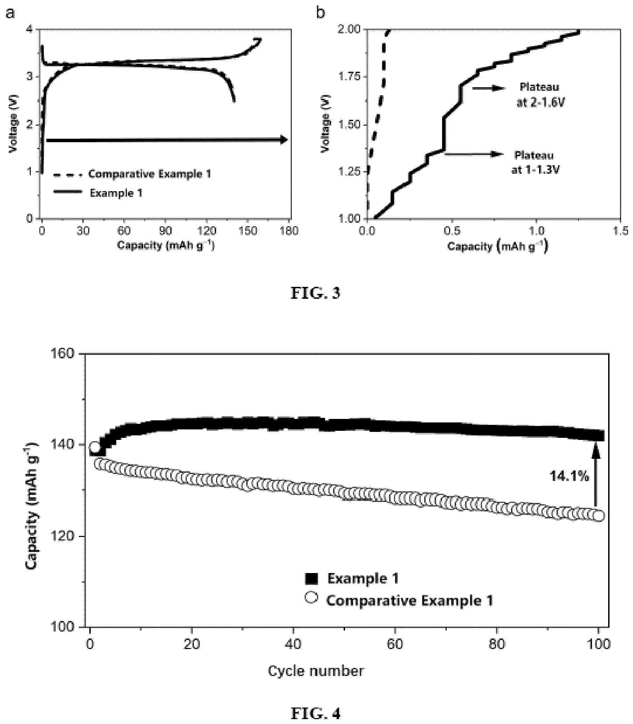

The lithium-ion batteries prepared in Example 1 and Comparative Example 1 were subjected to initial charging testing, cycle performance testing over 100 cycles, rate capability testing, and battery impedance testing, respectively. The experimental results were shown in FIG. 3, FIG. 4, FIG. 5, and FIG. 6.

FIG. 3(a) showed the cycling performance of the lithium-ion battery, wherein the x-axis represented the capacity of the lithium-ion battery in a range of 0-180 mAh·g⁻¹; FIG. 3(b) showed the cycling performance of the lithium-ion battery, wherein the x-axis represented the capacity of the lithium-ion battery in a range of 0-1.5 mAh·g⁻¹.

As can been seen from FIG. 3, compared with the initial charging curve of the lithium-ion battery prepared in Comparative Example 1, reaction plateaus could be observed at 1-1.3 V and 1.6-2.0 V in the initial charging curve of the lithium-ion battery prepared in Example 1.

As can been seen from FIG. 4, the cycle performance over 100 cycles of the lithium-ion battery prepared in Example 1 was significantly better than that of the lithium-ion battery prepared in Comparative Example 1.

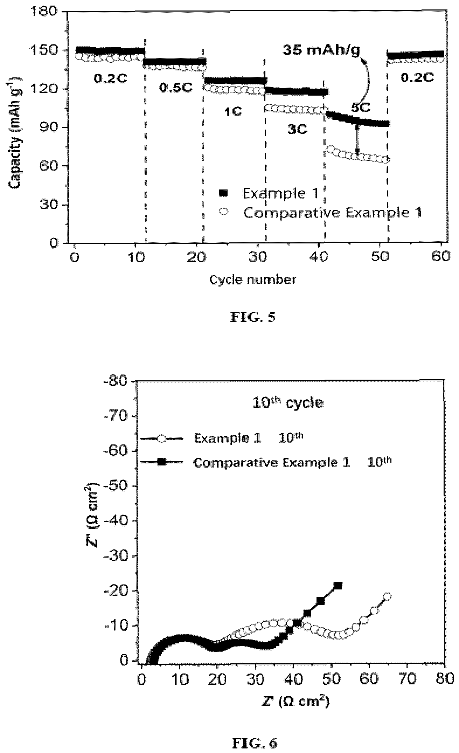

As can been seen from FIG. 5, the rate performance of the lithium-ion battery prepared in Example 1 was significantly better than that of the lithium-ion battery prepared in Comparative Example 1.

As can been seen from FIG. 6, the charge transfer impedance of the lithium-ion battery prepared in Example 1 was significantly lower than that of the lithium-ion battery prepared in Comparative Example 1.

As can been seen from the analysis results of FIG. 3 to FIG. 6, adding elemental sulfur (i.e., the anode layer-forming additive defined in the present disclosure) to the coating of the cathode electrode of the lithium-ion battery can effectively improve the stability of the SEI layer formed on the anode surface, reduce the charge transfer impedance and polarization, enhance the cycling stability of batteries, thereby improve the rate performance of lithium-ion batteries.

### Experimental Example 3

The lithium-ion batteries prepared in Examples 1-17 and Comparative Examples 1-2 were subjected to impedance testing after 10 cycles and battery capacity testing after 100 cycles, respectively. The experimental results were shown in Table 1.

**Table 1**

| Item | Impedance after 10 cycles (Ω) | Battery capacity after 100 cycles (mAh·g⁻¹) | Item | Impedance after 10 cycles (Ω) | Battery capacity after 100 cycles (mAh·g⁻¹) |
|---|---|---|---|---|---|
| Example 1 | 9.1 | 143.1 | Example 11 | 9.4 | 142.4 |
| Example 2 | 9 | 143.3 | Example 12 | 9.6 | 143 |
| Example 3 | 18 | 136.1 | Example 13 | 13.2 | 133.6 |
| Example 4 | 29.1 | 127.6 | Example 14 | 11 | 137.2 |
| Example 5 | 11.8 | 136.7 | Example 15 | 18 | 133.1 |
| Example 6 | 34.1 | 123.1 | Example 16 | 29.1 | 120.6 |

| | | | | | |
|---|---|---|---|---|---|
| Example 7 | 20.5 | 131.2 | / | / | / |
| Example 8 | 9.8 | 140 | Comparative Example 1 | 46.1 | 124.5 |
| Example 9 | 10.1 | 137.1 | Comparative Example 2 | 182.3 | 91.2 |
| Example 10 | 12.1 | 135.6 | / | / | / |

As can been seen from Table 1, the impedance of the lithium-ion batteries prepared in Examples 1-16 after 10 cycles was significantly lower than that of the lithium-ion batteries prepared in Comparative Examples 1-2; the battery capacity of the lithium-ion batteries prepared in Examples 1-16 after 100 cycles was significantly higher than that of the lithium-ion batteries prepared in Comparative Examples 1-2. Such results indicated that adding the anode layer-forming additive defined in the present disclosure to the coating of the cathode electrode or the electrolyte and adding the layer-forming solvent defined in the present disclosure to the electrolyte can effectively improve the cycling performance of lithium-ion batteries.

As can been seen from the comparison between Examples 3-14 and Example 1, when the coating of the cathode electrode comprises the anode layer-forming additive, the mass ratio of the anode layer-forming additive to the cathode active material, the selection of the anode active material, the selection of the cathode active material, the selection of the anode layer-forming additive, the selection of the layer-forming solvent, and the mass percentage of the layer-forming solvent in the electrolyte can all further affect the cycling performance of lithium-ion batteries.

As can been seen from the comparison between Examples 15-16 and Example 2, when the electrolyte comprises the anode layer-forming additive, the mass concentration of the anode layer-forming additive in the electrolyte can further affect the cycling performance of lithium-ion batteries.

In summary, the lithium-ion battery provided in the present disclosure can effectively improve the cycling performance of lithium-ion batteries using lithium iron phosphate or lithium manganese oxide as a cathode active material.

The above descriptions are only preferred embodiments of the present disclosure and are not intended to limit the present disclosure. For those skilled in the art, the present disclosure may have various modifications and variations. Any modifications, equivalent substitutions, improvements, etc. made within the spirit and principle of the present disclosure shall be included within the protection scope of the present disclosure.

### Industrial applicability

The present disclosure provides a lithium-ion battery. In the present disclosure, when lithium iron phosphate and/or lithium manganese oxide are used as a cathode active material to prepare the lithium-ion battery, an anode layer-forming additive comprising at least one selected from the group consisting of elemental sulfur and a metal sulfide is added to the coating of the cathode electrode and/or the electrolyte. The anode layer-forming additive can migrate to the anode surface during the initial charging process of the lithium-ion battery (i.e., during the electrochemical reaction process inside the lithium-ion battery) and participate in the formation of a SEI layer on the anode surface, which is conducive to allowing the SEI layer on the anode surface to contain both a high-valence sulfur-containing species with sulfur in a valence state of +4 and/or +6 and a low-valence sulfur-containing species with sulfur in a valence state of from -2 to -1/4.

The high-valence sulfur-containing species can rapidly transfer lithium ions and promote transport of lithium ions at the interphase. The anode layer-forming additive is reduced to a polysulfide at the anode to further react with the layer-forming solvent, thereby generating a low-valence sulfur-containing species with a PEO structure. The PEO structure has good toughness and can effectively alleviate the volume deformation of anode materials during charging and discharging processes. The existence of high-valence sulfur-containing and low-valence sulfur-containing species is beneficial for the formation of a structurally stable SEI layer on the anode surface, thereby reducing the charge transfer impedance and polarization, improving the cycling stability of the lithium-ion battery, and thus enhancing the rate performance of the lithium-ion battery.

In addition, it should be understood that the lithium-ion battery of the present disclosure is reproducible and can be applied in various industrial applications. For example, the lithium-ion battery of the present disclosure can be applied in the technology field of battery manufacturing.

## Claims

1. A lithium-ion battery, comprising: a separator, a cathode electrode, an anode electrode, and an electrolyte;
wherein a coating of the cathode electrode comprises a cathode material; the cathode material comprises a cathode active material, a conductive agent, and a binder; the cathode active material comprises at least one selected from the group consisting of lithium iron phosphate (LiFePO₄) and lithium manganese oxide (LiMn₂O₄);
the coating of the cathode electrode further comprises an anode layer-forming additive; and/or, the electrolyte comprises an anode layer-forming additive; the anode layer-forming additive comprises at least one selected from the group consisting of elemental sulfur and a metal sulfide; and
the electrolyte comprises a layer-forming solvent, and the layer-forming solvent has a structural formula as follows: 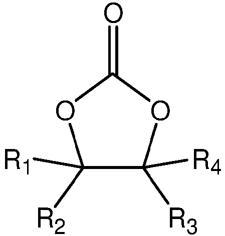
each of R₁, R₂, R₃, and R₄ is independently selected from hydrogen, halogen, alkyl, or hydrocarbyl; or
the layer-forming solvent has a structural formula as follows: 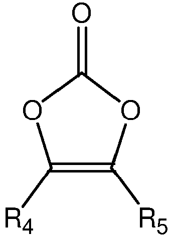
each of R₅, and R₆ is independently selected from hydrogen, halogen, alkyl, or hydrocarbyl.

2. The lithium-ion battery according to claim 1, wherein the metal sulfide comprises at least one selected from the group consisting of lithium sulfide, iron sulfide, iron disulfide, titanium disulfide, titanium trisulfide, zinc sulfide, tin disulfide, molybdenum disulfide, tungsten disulfide, cobalt disulfide, and nickel sulfide.

3. The lithium-ion battery according to claim 1 or claim 2, wherein the alkyl is a substituted alkyl, and/or the hydrocarbyl is a substituted hydrocarbyl;
optionally, the alkyl is methyl, ethyl, or butyl; the hydrocarbyl is vinyl, propenyl, or butenyl.

4. The lithium-ion battery according to any one of claims 1-3, wherein when the coating of the cathode electrode comprises the anode layer-forming additive, a mass ratio of the anode layer-forming additive to the cathode active material is (0.1-10): 100;
optionally, when the coating of the cathode electrode comprises the anode layer-forming additive, the mass ratio of the anode layer-forming additive to the cathode active material is (0.1-3): 100.

5. The lithium-ion battery according to any one of claims 1-3, wherein when the electrolyte comprises the anode layer-forming additive, a mass concentration of the anode layer-forming additive in the electrolyte is in a range of from 0.01 g/L to 10 g/L;
optionally, when the electrolyte comprises the anode layer-forming additive, the mass concentration of the anode layer-forming additive in the electrolyte is in a range of from 0.05 g/L to 1 g/L.

6. The lithium-ion battery according to any one of claims 1-4, wherein when the coating of the cathode electrode comprises the anode layer-forming additive, the cathode electrode is prepared by a method comprising steps of coating a mixed slurry containing the anode layer-forming additive, the cathode active material, the conductive agent, and the binder on a cathode foil, and subjecting the cathode foil to heat treatment at 80-160 °C for 4 h-12 h.

7. The lithium-ion battery according to any one of claims 1-4, wherein when the coating of the cathode electrode comprises the anode layer-forming additive, the cathode electrode is prepared by a method comprising steps of dispersing the anode layer-forming additive in a liquid or a gas using a liquid-phase method or a gas-phase method, and uniformly depositing the anode layer-forming additive on a surface of the cathode electrode.

8. The lithium-ion battery according to any one of claims 1-4, wherein when the coating of the cathode electrode comprises the anode layer-forming additive, the cathode electrode is prepared by a method comprising steps of dissolving sublimated sulfur powder in carbon disulfide, coating the elemental sulfur in carbon disulfide on a surface of the cathode electrode, and drying.

9. The lithium-ion battery according to any one of claims 1-8, wherein a coating of the anode electrode comprises an anode active material, which comprises at least one selected from the group consisting of a carbon-based material, a silicon-based material, an alloy, and lithium.

10. The lithium-ion battery according to claim 9, wherein the anode active material comprises graphite, silicon-carbon with a specific capacity of 450, or silicon.

11. The lithium-ion battery according to any one of claims 1-10, wherein the layer-forming solvent comprises at least one selected from the group consisting of Ethylene carbonate, Fluoroethylene carbonate, Difluoroethylene carbonate, Vinylene carbonate, and 2,3-Butylene carbonate.

12. The lithium-ion battery according to any one of claims 1-11, wherein a mass of the layer-forming solvent is 1%-100% of a total mass of solvents in the electrolyte;
optionally, the mass of the layer-forming solvent is 5%-40% of the total mass of solvents in the electrolyte.

13. The lithium-ion battery according to any one of claims 1-12, wherein a median particle size D₅₀ of the anode layer-forming additive is in a range of from 0.01 µm to 20 µm;
optionally, the median particle size D₅₀ of the anode layer-forming additive is in a range of from 0.05 µm to 5 µm.

14. The lithium-ion battery according to any one of claims 1-13, wherein after a formation process of the lithium-ion battery, a solid electrolyte interphase layer on a surface of the anode electrode contains a high-valence sulfur-containing species and a low-valence sulfur-containing species;
in the solid electrolyte interphase layer on the surface of the anode electrode, the high-valence sulfur-containing species contains sulfur in a valence state of +4 and/or +6, and has a S2p spectral peak at 168 eV -172 eV; and
in the solid electrolyte interphase layer on the surface of the anode electrode, the low-valence sulfur-containing species contains sulfur in a valence state of from -2 to -1/4, and has a S2p spectral peak at 160 eV -166 eV;
optionally, in the solid electrolyte interphase layer on the surface of the anode electrode, an area ratio of the S2p spectral peak of the high-valence sulfur-containing species to the S2p spectral peak of the low-valence sulfur-containing species is (1-4): 1;
optionally, after the formation process of the lithium-ion battery, a cathode electrolyte interphase layer on a surface of the cathode electrode contains a high-valence sulfur-containing species; in the cathode electrolyte interphase layer on the surface of the cathode electrode, the high-valence sulfur-containing species contains sulfur in a valence state of +4 and/or +6, and has a S2p spectral peak at 168 eV -172 eV.
